# EUROPEAN PATENT SPECIFICATION

(11) **EP 1 555 895 B1**
(45) Date of publication and mention of the grant of the patent: **28.02.2007**
(21) Application number: 03753429.4
(22) Date of filing: 18.09.2003
(51) Int. Cl.: A23L 1/30, A23D 7/00, A23D 9/007, A23L 1/302

(54) **WATER IN OIL EMULSION COMPRISING STEROLESTERS**
STEROLESTER UND FOLSÄURE ENTHALTENDE WASSER-IN-ÖL EMULSION
EMULSION EAU DANS HUILE CONTENANT DES STEROLS ESTERIFIES

(30) Priority: 31.10.2002 EP 02257560
(43) Date of publication of application: 27.07.2005
(73) Proprietor: UNILEVER N.V., 3013 AL Rotterdam (NL); UNILEVER PLC, London EC4P 4BQ (GB)
(72) Inventor: FLÖTER, Eckhard UNILEVER R & D VLAARDINGEN, NL-3133 AT Vlaardingen (NL); GARBOLINO, Chiara UNILEVER R & D VLAARDINGEN, NL-3133 AT Vlaardingen (NL); TERPSTRA, Adriana, Huiberdina UNILEVER Bestfoods, NL-2600 MB Delft (NL)
(74) Representative: Joppe, Hermina Laura Petronella
(86) International application number: PCT/EP2003/010420
(87) International publication number: WO 2004/039177

(56) References cited:
- EP-A- 1 155 699
- EP-A- 1 180 545
- US-A- 5 958 913
- US-A- 6 162 483
- US-A1- 2002 068 095
- MILO OHR L.: "Circulating Heart-Smart News" FOOD TECHNOLOGY, [Online] vol. 56, no. 6, June 2002 (2002-06), pages 109-110,112,114-115, XP002234185 ISSN: 0015-6639 Retrieved from the Internet: <URL:http://www.ift.org/publications/docsh op/ft_shop/06-02/06-02-pdfs/06-02-nutraceu ticals.pdf> [retrieved on 2003-03-06]

## Description

### Field of the invention

The invention relates to water in oil emulsions comprising sterol fatty acids esters and folic acid.

### Background to the invention

Sterols are well known cholesterol lowering agents. The benefit of these ingredients to reduce the risk to cardiovascular diseases has been established for years. Where these active ingredients were initially available in the form of capsules and other pharmaceutical preparations only, over the years they have also become available in food products. The incorporation of these active ingredients in food products that are consumed daily enables the easy and reliable intake of these ingredients for many people.

In the search for suitable food products to incorporate sterols, it was soon found that the sterols as such are not soluble in water and show limited solubility in oil. This made the choice of food products suitable for incorporation of sterols very limited. To overcome this drawback sterols have been modified to improve their solubility in the fat phase of food products. The most common modification of sterols is to their corresponding fatty acid esters. Commercial products such as Becel pro-activ^{tm}, and Benecol^{tm} comprise sterol fatty acid esters.

EP-A-512497 and EP-A-828434 disclose food products comprising these fatty acid esters of sterols. However the products disclosed herein, especially the water in oil emulsions which are spreadable, were found to show differences in physical properties compared to the traditional emulsions without added sterol fatty acid esters.

EP1180545 discloses vegetable sterol-containing fat compositions in form of W/O emulsions which may contain folic acid, among other constituents. This document is concerned only with the medical effects of the sterols.

US 2002/068095 also focuses on cholesterol-lowering agents like phytosterols and its compositions employ nutritional additives like folic acid.

One of the drawbacks of addition of sterol fatty acid esters is the resulting size reducing effect on the droplet size of the dispersed aqueous phase. This size reducing effect is believed to contribute to the also signalled deterioration in mouth feel, especially in the melting properties of the water in oil emulsion. Melting of the emulsion in mouth is believed to lead to break up of the emulsion, thereby releasing the flavour and salt from the dispersed phase. Deterioration in this break up leads to a prolonged fatty impression of the emulsion and blocks the release of the flavours of the dispersed phase. Furthermore, without wishing to be bound by any theory, we believe that a reduced dispersed phase droplet size may in certain circumstances lead to harder, sometimes more brittle products.

It is an object of the current invention to overcome at least part of these drawbacks.

### Summary of the invention

It has now been found that the addition of folic acid to a water in oil emulsion comprising sterol fatty acid esters is effective in influencing the mouthfeel of the emulsion, the emulsion break down behaviour of the emulsion and in influencing the droplet size reducing effect of sterol fatty acid esters.

Therefore the present invention relates to a water in oil emulsion comprising from 20 to 90 wt% fat and from 2 to 20 wt% of a sterol fatty acid ester, wherein the emulsion further comprises from 1.5 ppm to 1 wt% folic acid.

In a further aspect the invention relates to a method to prepare said water in oil emulsion and to use of folic acid in such emulsions.

### Detailed description

Where a percentage is used, this relates to wt% unless other wise is indicated.

In the context of the invention, the terms "oil" and "fat" are used interchangeably.

In the context of the invention the term sterol refers to both sterols, which are also called phytosterols and to the saturated equivalents, stanols, or phytostanols.

Phytosterols, also known as plant sterols or vegetable sterols can be classified in three groups, 4-desmethylsterols, 4-monomethylsterols and 4,4'-dimethylsterols. In oils they mainly exist as free sterols and sterol esters of fatty acids although sterol glucosides and acylated sterol glucosides are also present. There are three major phytosterols namely beta-sitosterol, stigmasterol and campesterol. Schematic drawings of the components meant are as given in "Influence of Processing on Sterols of Edible Vegetable Oils", S.P. Kochhar; Prog. Lipid Res. 22: pp. 161-188.

The respective 5α- saturated derivatives such as sitostanol, campestanol and ergostanol and their derivatives are also encompassed in the term phytosterol.

Preferably the phytosterol is selected from the group comprising fatty acid ester of β-sitosterol, β-sitostanol, campesterol, campestanol, stigmasterol, stigmastanol or a mixture thereof.

The phytosterols according to the invention are esterified with a fatty acid. Preferably the sterols are esterified with one or more C₂₋₂₂ fatty acids. For the purpose of the invention the term C₂₋₂₂ fatty acid refers to any molecule comprising a C₂₋₂₂ main chain and at least one acid group. Although not preferred within the present context the C₂₋₂₂ main chain may be partially substituted or side chains may be present. Preferably, however the C₂₋₂₂ fatty acids are linear molecules comprising one or two acid group(s) as end group(s). Most preferred are linear C₈₋₂₂ fatty acids as occur in natural oils.

Suitable examples of any such fatty acids are acetic acid, propionic acid, butyric acid, caproic acid, caprylic acid, capric acid. Other suitable acids are for example citric acid, lactic acid, oxalic acid and maleic acid. Most preferred are lauric acid, palmitic acid, stearic acid, arachidic acid, behenic acid, oleic acid, cetoleic acid, erucic acid, elaidic acid, linoleic acid and linolenic acid.

When desired a mixture of fatty acids may be used for esterification of the sterols. For example, it is possible to use a naturally occurring fat or oil as a source of the fatty acid and to carry out the esterification via an interesterification reaction.

In a particular embodiment, the fatty acid mixture contains a high amount (>35%, preferably >45%, further preferred >60%) of polyunsaturated fatty acids (PUFA). This does not only provide the advantage of PUFA itself having good blood cholesterol lowering capacity, but also of the sterol esters prepared with such fatty acids being considered as having a higher solubility and blood cholesterol lowering efficacy in the body.

Preferably fatty acid mixtures of sunflower, safflower, rapeseed, linseed, linola and/or soybean are used. These are typical sources of high PUFA and/or low SAFA (saturated fatty acids). Suitable esterification conditions are for example described in WO-A-92/19640.

Suitable sources of phytosterols are for example soy bean, wood pulp, rapeseed oil.

The sterol fatty acid ester is present in an amount of from 2 to 20 wt%, preferably from 5 to 15 wt% on total emulsion weight. The preferred amount is such that the average total daily intake for a consumer taking the usual amounts of the product is from 1.6 g to 2 g free sterol per day. Hence it will be appreciated that the amount included may be dependent on the serving size of the product concerned.

The emulsions according to the invention comprise folic acid. Without wishing to be bound by any theory, it is believed that the addition of folic acid influences the mouthfeel and the way the emulsion breaks up in mouth upon consumption. This mouthfeel and emulsion break down behaviour can be judged by trained panels. It is believed that this change in mouthfeel, especially referring to melting behaviour, and emulsion breakdown characteristics is at least partly due to the influence the folic acid has on the droplet size of the dispersed aqueous phase, partly counteracting the droplet size decreasing effect of the sterolesters in the emulsion.

In the context of the invention, the term mouthfeel especially refers to the melting properties of a product on consumption. Other aspects of mouthfeel that are specifically addressed by the current invention are salt and flavour release.

In the context of the invention the term folic acid includes folates and salts of folic acid such as disodium folate and folate derivatives or their salts (with for instance sodium, calcium or magnesium). Folic acid, folate or derivatives thereof are preferably selected from the group comprising 5-Formyltetrahydrofolic Acid, 10-Formyltetrahydrofolic Acid, 5,10-Methenyltetrahydrofolic Acid, 5-Methyltetrahydrofolic Acid, 5,10-Methylenetetrahydrofolic Acid, Tetrahydrofolic Acid, 7,8-Dihydrofolic Acid, Folic Acid, Pteroic Acid or combinations thereof.
Folic acid is a synthetic form of folate, a well known dietary compound. The natural sources of folate are fresh green vegetables, liver, yeast and some fruits. Human diets preferably daily include folic acid or folate, as we cannot make it ourselves. Folic acid is part of the group of B vitamins of which also vitamin B6 and vitamin B12 are a part. While folates are both converted into an active form that the body uses, folic acid has the advantage of being more available to the body and that it does not degrade during storage and temperature changes.

The amount of folic acid is from 1.5 ppm (0.00015 wt%) to 1 wt%, more preferred from 1.5 ppm to 0.2 wt%, even more preferred from 5 ppm (0.0005wt%) to 0.01 wt%, even more preferred from 10 ppm (0.001 wt%) to 0.01 wt% on total product weight. Lower amounts were found to lead to products which did not show the desired change in mouthfeel and reduction of the size reducing effect of the sterol fatty acid esters. Higher amounts are not recommended due to likelihood of very high intake of folic acid.

The water in oil emulsions according to the invention may be of any physical texture such as pourable or spreadable. The emulsions are preferably spreadable emulsions. Even more preferred the emulsions are edible emulsions such as food products. Examples of suitable (spreadable) emulsions are margarine, butter like products, low fat spreads. Examples of such compositions are disclosed in EP-A-594612, EP-A-828434.

The preferred amount of fat in these emulsions is from 30 to 90 wt%, more preferred 30 to 60 wt%, more preferred from 35 to 45 wt%.

The fat may be any suitable oil or fat. Preferred fats are those known for the production of margarine and margarine derivatives such as low fat spreads. The fat is for example selected from the group comprising sunflower oil, rapeseed oil, palm oil, coconut oil, soy bean oil, palm kernel oil, butter fat or a combination thereof.

Folic acid is known to participate in the metabolism of homocysteine, an amino acid in the human diet. For a number of years, high homocysteine levels have been correlated to high incidence of cardiovascular disease. It is thought that lowering homocysteine may reduce the risk of cardiovascular disease. Hence the addition of folic acid to compensate for the droplet size reducing effect is beneficial for the consumer in that it simultaneously reduces homocysteine levels in blood which is thought to further decrease the risk of coronary heart disease. We have surprisingly found that other B vitamins such as vitamin B6 and or vitamin B12 do not have the effect that folic acid has on the mouthfeel, emulsion breakdown and droplet size in the presence of sterolesters in an emulsion.

Vitamins B6 and B12 are known to interfere with the biosynthesis of purine and thiamine, to participate in the synthesis of the methyl group in the process of homocysteine methylation for producing methionine and in several growth processes. Vitamin B6 (pyridoxine hydrochloride) is a known vitamin supplement. Vitamin B12 (cyanobalamin) contributes to the health of the nervous system and is involved in the production of red blood cells. It is also known as a vitamin in food supplements.

Because of their combined positive effect on cardiovascular disease risk reduction, it is preferred that the water in oil emulsion according to the invention comprises vitamin B6 and vitamin B12 in addition to folic acid. The preferred amount of vitamin B6 is from 0.0010 to 0.5 wt% on total emulsion weight. The preferred amount of vitamin B12 is from 0.000005 to 0.0005 wt% on total emulsion weight.

The present water in oil emulsion comprises folic acid to compensate for the reduction of droplet size of the dispersed water phase. The preferred droplet size in terms of the D3,3 of the dispersed water phase is from 2 to 8 µm, more preferred from 3 to 6 µm.

Optionally the emulsion comprises a thickener. Thickeners such as alginate, starch, gelatinised starch, gums including gellan gum, locust bean gum, xanthan gum or combinations thereof are commonly used to provide texture and/or viscosity in emulsion products.

Optionally the emulsion comprises an emulsifier to assist in the homogeneous admixture of aqueous phase and fat phase. Suitable emulsifiers are preferably selected from the group comprising saturated or unsaturated monoglycerides, saturated or unsaturated diglycerides, polyoxysorbitanesters, citric acid esters, lactic acid esters or a combination thereof. Preferably the emulsion comprises a monoglyceride, more preferred a saturated monoglyceride.

For improvement of taste and to impart nutritional value, the emulsions optionally comprise a protein. Said protein can be of vegetable or dairy origin whereby dairy origin is preferred.
Dairy proteins are suitably selected from sources such as milk protein, whey protein, skim milk powder, whey powder, sweet whey (powder), buttermilk or butter milk powder or a combination thereof. The amount of such protein is for example from 0.2 to 3, preferably from 0.5 to 2 wt% on total emulsion weight.

In an alternative embodiment the products comprise one or more well known antioxidants. These were found especially suitable for reduction of oxidation of fatty acids. Examples of well known antioxidants are propylgallate, tocopherol, ascorbic acid (ester).
Such compositions are especially suitable for use at increased pH over 5.3.

In order to further improve the oxidative stability of the products, especially of the unsaturated fatty acids optionally contained therein, a sequestrant such as EDTA or citric acid is optionally added.
In addition to the above described ingredients the emulsions may comprise optional ingredients that are commonly used in margarine type products. Such ingredients include but are not limited to colouring agents, flavour components, preservatives such as potassium sorbate, herb, fruit or nut particles, and healthy ingredients such as vitamins, fibres.

The emulsion according to the invention may be prepared in any suitable way.
To prepare a pourable product, in an example of a suitable process a premix comprising all ingredients is prepared, followed by blending and mixing in order to establish a suitable emulsion. If desired the crystallisation of solid fat if present can either be performed a priory or as a processing step in which the premix is cooled by one or more scraped surface heat exchangers. In such a step also the process of emulsification could take place. Emulsification could on the other hand as well be envisaged by other kinds of techniques as, e.g. membrane emulsification and alike.

For the preparation of a spreadable product, it is preferred that a premix is prepared at a temperature of about 40 to 70 °C such that the fats are melted. The composition is then preferably processed through a high shear unit with simultaneous cooling, which is optionally repeated, followed by processing in a pin stirrer and storage of the final product at a temperature from 0 to 25°C.

We have found that the inclusion of folic acid and optionally vitamin B6 and B12 is not straight forward because of the limited solubility of folic acid in water and the insolubility of folic acid and the vitamins in oil. This limited solubility hinders the desired homogeneous distribution of the folic acid and the vitamins in the water in oil emulsion.

Therefore in a preferred process measures are taken to improve the homogeneous distribution of folic acid and the optionally added vitamins in the final water in oil emulsion.
We have surprisingly found that one or a combination of the steps (a,b,c) leads to improvement of homogeneous distribution of these ingredients throughout the emulsion.
Therefore in a preferred embodiment the invention relates to a process to prepare a water in oil emulsion comprising from 20 to 90 wt% fat, preferably 30 to 90% fat, and from 2 to 20 wt% of a sterol fatty acid ester, and from 1.5 ppm (0.00015 wt%) to 1 wt% folic acid wherein the folic acid is added according to any of steps (a,b,c) or a combination thereof:
a. Folic acid is added onto a carrier and as such dosed into an emulsion or an aqueous phase
b. Folic acid is added into the aqueous phase of an oil in water emulsion, homogenised by stirring for a few seconds, after which the emulsion is inverted into the corresponding water in oil emulsion through high speed stirring.
c. Folic acid is pre-dispersed in one or a combination of the ingredients of the emulsion.

In step (a) the carrier plus folic acid is for instance made by spray drying folic acid onto maltodextrine whereby preferably the folic acid content is from 25% to 75% on total weight of the carrier and the folic acid.

In step (a) the emulsion or aqueous phase is preferably at 30 to 70 degrees C for better dispersion and solubility.

In step (a) the emulsion or aqueous phase are preferably stirred before and/or during the addition of the carrier with folic acid.

In step (b) the original oil in water emulsion comprising folic acid is the basis of the final water in oil emulsion which is obtained by inversion.

In step (c) the pre-dispersion can for instance be carried out in:
1. Oil with emulsifier: folic acid is added to heated oil with emulsifier whereby the oil is preferably at 50-70 °C and the emulsifier is preferably mono- and/or diglycerides at a preferred level of 0.1-1% and subsequently the oil is stirred, allowing it to homogenise for 10 minutes; or
2. Water: folic acid is added to water and the resulting dispersion is dosed into the emulsion or (part of) the aqueous phase. This pre-dispersion preferably comprises 100 to 1000 times more folic acid than the end concentration in the emulsion.
3. Sterol fatty acid esters: folic acid is added to heated sterol fatty acid esters while stirring. The temperature of the sterol ester is preferably at 60 to 70 °C. The resulting dispersion can then be added more easily to the oil phase of the emulsion.

The optional vitamin B6 and vitamin B12 are preferably added according to the same steps a,b and/or c.

In another aspect the invention relates to the use of folic acid to improve the mouthfeel and emulsion break down behaviour of a water in oil emulsion comprising from 20 to 90 wt% fat, preferably 30 to 90 wt% fat, and from 2 to 20 wt% sterol fatty acid esters.

In a further aspect the invention relates to the use of folic acid to counteract the droplet size reducing effect of sterol fatty acid esters in a water in oil emulsion comprising from 30 to 90 wt% fat.

The invention is now illustrated in the following non-limiting examples.

### Examples

### General

### Method to determine D3,3

D3.3 is a way to express the size (in µm unless otherwise stated) of a droplet of one phase/liquid in another, for instance a water droplet in oil. It is the volume weighted geometric mean water droplet diameter, i.e. 50% of the total water volume is present in droplets with a diameter larger than D3.3. To measure the D3.3 Nuclear Magnetic Resonance is used. The disturbance of a magnetic field applied over an emulsion is a measure for the droplet size.

Increase in D3.3 is normally found to lead to higher colour intensities of the water in oil emulsions.

### Example 1

A spreadable water in oil emulsion with 35% fat (triglycerides only) was prepared with the following ingredients:
- Oil blend (partially hardened) rapeseed oil, sunflower oil, palm kernel oil and palm oil 35%
- Sterol esters of beta sitosterol and sunflower oil 13.9%
- Mono/diglycerides 0.3%
- Water up to 100%
- Whey powder 0.4%
- Potassium sorbate 0.14%
- Alginate 0.3%
- Maltodextrin 3.0%
- Citric acid 0.2%
- Beta-carotene 0.0028%
- Butter flavour 0.03%

Folic acid was added to the water phase at 0.05 and 0.1 wt% concentrations on product. The emulsion was prepared by mixing the oil phase and water phase at 65 degrees C for a few minutes such that the fats are melted. The composition is then processed through a number of high shear units with simultaneous cooling, followed by processing in a pin stirrer. The tubs with the water in oil emulsion were then left to fully crystallise at 5 °C for 10 days.
The spreadable water in oil emulsions were evaluated by a trained sensory panel who evaluate and assess attributes of spreadable, vegetable fat based water in oil emulsions. D3.3 of the spread was measured. Main results are as follows:
0.05 wt% Folic acid spread: D3.3 5.37µm (sigma 2.1)
0.1 wt% Folic acid spread: D3.3 6.38 µm (sigma 2.1)

The salt and flavour release and mouthfeel in terms of melting behaviour of the spread containing more folic acid was perceived to be better than the mouthfeel of the spread with less folic acid. Also colour intensity was found to be higher of spread with higher folic acid content.

On the basis of this example it is concluded that 0.05% folic acid has a droplet size-increasing effect and that this effect is improved by increasing the folic acid level to 0.1 wt%.

### Example 2

A spreadable water in oil emulsion with 35% fat (triglycerides only) was prepared with the ingredients as in example 1.

One emulsion was produced without the folic acid (control). In one trial the folic acid was added to the water phase at 10 ppm. Also, vitamin B6 and B12 were added (resp. 100 and 0.05 ppm concentrations on product). The emulsion was prepared by mixing the oil phase and water phase at 65 degrees C for a few minutes, then processing both emulsions as in example 1. The tubs with the water in oil emulsion were then left to fully crystallise at 5 °C for 5 weeks.
The spreadable water in oil emulsions were evaluated by a trained sensory panel who evaluate and assess attributes of spreadable, vegetable fat based water in oil emulsions. D3.3 of the spread was measured.

Main results are as follows:
Added folic acid spread: D3.3 5.75 µm (sigma 1.62)
control spread: D3.3 5.20µm (sigma 1.55)

The flavour release/ mouthfeel in terms of melting behaviour of the spread containing folic acid was perceived to be better than the mouthfeel of the spread without folic acid.
On the basis of this example it is concluded that 10ppm folic acid has a droplet size-increasing effect compared to product without folic acid.

### Example 3

A spreadable water in oil emulsion with 35% fat (triglycerides only) was prepared with the following ingredients:
- Oil blend (partially hardened) rapeseed oil, sunflower oil, palm kernel oil and palm oil 35%
- Sterol or stanol esters and sunflower oil 13.9%
- Mono/diglycerides 0.3%
- Water up to 100%
- Whey powder 0.4%
- Potassium sorbate 0.14%
- Alginate 0.7%
- Salt 0.3%
- Maltodextrin 3.5%
- Citric acid 0.2%
- Beta-carotene 0.0028%
- Butter flavour 0.02%

Folic acid was added to the water phase at 10 ppm. Also vitamin B6 and B12 were added (resp. 100ppm and 0.05 ppm concentrations on product). The emulsion was prepared by mixing the oil phase and water phase at 65 degrees C for a few minutes, then processing as in example 1. The tubs with the water in oil emulsion were then left to fully crystallise at 5 °C for 10 days.
The spreadable water in oil emulsions were analytically evaluated on D3.3. The results are as follows:

**Table 1**

| **Sterol type** | **Folic acid** | **D3.3** | **sigma** |
|---|---|---|---|
| 8% stanolester | none | 4.09 | 1.46 |
| 8% stanolester | 0.01wt% | 4.32 | 1.55 |
| | | | |
| 8% sterolester | none | 4.59 | 1.63 |
| 8% sterolester | 0.01 wt% | 5.33 | 1.63 |

Also, the products with folic acid were found to have a higher colour intensity compared to the products without folic acid.

The products with folic acid content were found to have a higher droplet size compared to the products without folic acid. The effect was visible both for stanolester and sterolester products. On the basis of this example it is concluded that folic acid has a droplet size-increasing effect.

### Example 4

A spreadable water in oil emulsion with 44% fat phase including 13.8% sterolesters was prepared with the following ingredients:
- Oil blend (partially hardened) rapeseed oil, sunflower oil, palm kernel oil, palm oil with sterol esters 43.9%
- Mono/diglycerides 0.3%
- Water up to 100%
- Potassium sorbate 0.14%
- Alginate 0.7%
- Salt 0.5%
- Maltodextrin 3.5%
- Citric acid 0.2%
- Beta-carotene 0.0028%
- Butter flavour 0.005%

Folic acid was added to the water phase at 0.1 and 0.01 wt%. Also vitamin B6 and B12 were added (resp. 100ppm and 0.05 ppm concentrations on product). The emulsion was prepared by mixing the oil phase and water phase at 65 degrees C for a few minutes, then processing as in example 1. The tubs with the water in oil emulsion were then left to fully crystallise at 5 °C for 1 day. Main results are as follows:
Added 0.1 wt% folic acid spread: D3.3 4.7 µm (sigma 1.8)
Added 0.01 wt% folic acid spread: D3.3 4.5 µm (sigma 1.7)
control spread: D3.3 4.3µm (sigma 1.7)

The products with higher folic acid content were found to have a higher droplet size compared to the products without or with less folic acid. On the basis of this example it is concluded that folic acid at 0.1 and 0.01 wt% has a droplet size-increasing effect.

### Example 5

Three w/o emulsions with 80% fat phase were prepared based on the following ingredients:
- Sunflower oil
- Fully hydrogenated high erucic rapeseed oil
- Monoglycerides
- Sterol esters (ester of betasitosterol with sunflower oil)
- Water
- Folic acid

### Preparation:

Monoglycerides, sterol esters and sunflower oil were mixed and heated up to 50°C. This fat phase makes up for 72% of the total composition, the monoglycerides account for 0.1% w/w, the sterol esters are added at levels of 0 and 8% w/w, and sunflower oil up to 72%. After cooling down to 30°C, pre-crystallized fully hydrogenated high erucic rapeseed oil (8% w/w) in a powder form was added to the fat phase while gently stirring. After obtaining an homogeneous slurry, the water phase was added to the fat phase while agitating with an Ultra-Turrax homogenizer at 12,900 rpm for 10 minutes. Folic acid (0.1% w/w) was pre-dispersed in the water phase prior to the addition to the fat phase. All concentrations are related to the total composition of the emulsion.
The compositions (%) and measured D3.3 and sigma of the samples (averages of three measurements) are presented in the following table 2:

**Table 2; composition and results example 5**

| | Sample 1 (comparison) | Sample 2 (comparison ) | Sample 3 (according to invention) |
|---|---|---|---|
| Sunflower oil | 71.9 | 63.9 | 63.9 |
| Fully hydrogenated high erucic rapeseed oil | 8.0 | 8.0 | 8.0 |
| Sterol esters | no | 8 | 8 |
| Folic acid | no | no | 0.1 |
| water | 20.0 | 20.0 | 20.0 |
| D3.3/ µm | 3.55 | 2.85 | 3.46 |
| sigma | 0.3 | 0.25 | 0.32 |

The data shown in the table above clearly document that the addition of sterol esters to w/o emulsions results in reduced average droplet sizes (approx. -20%). Further, small quantities of folic acid counteract this effect (approx. +21%).

### Example 6

Four w/o emulsions with 80% fat phase were prepared based on the following ingredients:
- Sunflower oil
- Fully hydrogenated high erucic rapeseed oil
- Monoglycerides
- Sterol esters (ester of betasitosterol with sunflower oil)
- Water
- Folic acid
- Vitamin B6
- Vitamin B12

### Preparation:

Monoglycerides, sterolesters and sunflower oil were mixed and heated up to 50°C. This fat phase makes up for 72% of the total composition, the monoglycerides account for 0.1% w/w, the sterol esters are added at levels of 8% w/w, and sunflower oil up to 72%. After cooling down to 30°C, pre-crystallized fully hydrogenated high erucic rapeseed oil (8% w/w) in a powder form was added to the fat phase while gently stirring. Folic acid (0 ppm, 50 ppm), vitamin B6 (0.05% w/w) and vitamin B12 (0.000025% w/w) were dispersed in the water phase. Then the water phase was added to the fat phase while agitating with a Ultra-Turrax homogenizer at 12,900 rpm for 10 minutes. All concentrations are related to the total composition of the emulsion.

The compositions (%) and measured D3.3 and sigma of the samples (averages of three measurements) are presented in the following table 3:

**Table 3: composition and results example 6**

| | Sample 1 (comparison) | Sample 2 (according to invention) | Sample 3 (according to invention) | Sample 4 (comparison) |
|---|---|---|---|---|
| Sunflower oil | 63.9 | 63.9 | 63.9 | 63.9 |
| Fully hydrogenat ed high erucic rapeseed oil | 8.0 | 8.0 | 8.0 | 8.0 |
| Sterol esters | 8 | 8 | 8 | 8 |
| Folic acid | no | 50 ppm | 50 ppm | no |
| Vitamin B6 | no | no | 0.05 | 0.05 |
| Vitamin B12 | no | no | 0.000025 | 0.000025 |
| water | 20.0 | 20.0 | 20.0 | 20.0 |
| D3.3/ µm | 2.85 | 3.06 | 2.99 | 2.89 |
| sigma | 0.25 | 0.31 | 0.38 | 0.22 |

The above results clearly show that the effect of the droplet size increase is in particular related to the presence of folic acid, and not simply due to the presence of solid material (e.g vitamins B6 and B12) in the water phase.

### Example 7

Two w/o emulsions with 80% fat phase were prepared with the following ingredients:
- Sunflower oil
- Fully hydrogenated high erucic rapeseed oil
- Monoglycerides
- Sterol esters (ester of betasitosterol with sunflower oil)
- Water
- Folic acid

### Preparation:

Monoglycerides, sterolesters and sunflower oil were mixed and heated up to 50°C. The monoglycerides account for 0.1% w/w, the sterol esters are added at levels of 8% w/w, and sunflower oil up to 72%. After cooling down to 30°C, pre-crystallized fully hydrogenated high erucic rapeseed oil (8% w/w) in a powder form was slowly added to the fat phase while stirring. After obtaining an homogeneous slurry, the water phase was added to the fat phase while agitating with a Ultra-Turrax homogenizer at 12,900 rpm for 10 minutes. Folic acid (10 ppm) was pre-dispersed in the water phase prior to the addition to the fat phase. All concentrations are related to the total composition of the emulsion.
The compositions (%) and measured D3.3 and sigma of the samples (averages of three measurements) are presented in the following table 4:

**Table 4, composition and results example 7**

| | Sample 1 (comparison) | Sample 2 (according to the invention) |
|---|---|---|
| Sunflower oil | 63.9 | 63.9 |
| Fully hydrogenated high erucic rapeseed oil | 8.0 | 8.0 |
| Sterol esters | 8 | 8 |
| Folic acid | no | 10 ppm |
| water | 20.0 | 20.0 |
| D3.3/ µm | 2.85 | 3.00 |
| sigma | 0.25 | 0.35 |

It is clear from the above results that even very small quantities of folic acid have a significant effect in terms of droplet size increase.

### Example 8

Two w/o emulsions with 80% fat phase were prepared with the following ingredients:
- Sunflower oil
- Fully hydrogenated high erucic rapeseed oil
- Monoglycerides
- Sterol esters (ester of betasitosterol with sunflower oil)
- Water
- Folic acid

### Preparation:

Monoglycerides, sterolesters and sunflower oil were mixed and heated up to 50°C. The monoglycerides were added at a level of 0.1% w/w, the sterol esters at 18% w/w, and sunflower oil up to 72%. After cooling down to 30°C, pre-crystallized fully hydrogenated high erucic rapeseed oil (8% w/w) in a powder form was slowly added to the fat phase while stirring. Folic acid (0.1%) was pre-dispersed in the water phase. After obtaining an homogeneous slurry, the water phase was added to the fat phase while agitating with a Ultra-Turrax homogenizer at 12,900 rpm for 10 minutes. All concentrations are related to the total composition of the emulsion.
The compositions (%) and measured D3.3 and sigma of the samples (averages of three measurements) are presented in the following table 5:

**Table 5: composition and results example 8**

| | Sample 1 | Sample 2 |
|---|---|---|
| Sunflower oil | 53.9 | 53.9 |
| Fully hydrogenated high erucic rapeseed oil | 8.0 | 8.0 |
| Sterol esters | 18 | 18 |
| Folic acid | no | 0.1% |
| water | 20.0 | 20.0 |
| D3.3/ µm | 2.12 | 2.53 |
| sigma | 0.44 | 0.42 |

The results presented in the above table evidently indicate that the addition of folic acid has a significant increasing effect (approx. +19%) on the droplet size of the water phase of an emulsion with high level of sterol esters.

## Claims

1. Water in oil emulsion comprising from 20 to 90 wt% fat and from 2 to 20 wt% of a sterol fatty acid ester, **characterized in that** the emulsion further comprises from 1.5 ppm to 1 wt% folic acid.

2. Water in oil emulsion according to claim 1 wherein the amount of folic acid is from 5 ppm to 0.01 wt%.

3. Water in oil emulsion according to claim 1 or claim 2 further comprising vitamin B6 and vitamin B12.

4. Water in oil emulsion according to claim 3 wherein the amount of vitamin B6 is from 0.0010 to 0.5 wt% on total emulsion weight and the amount of vitamin B12 is from 0.000005 to 0.0005 wt% on total emulsion weight.

5. Water in oil emulsion according to any of claims 1-4 wherein the D3,3 of the dispersed water phase is from 2 to 8 µm.

6. Water in oil emulsion according to any of claims 1-5 wherein the sterol fatty acid ester is selected from the group comprising fatty acid ester of β-sitosterol, β-sitostanol, campesterol, campestanol, stigmasterol, stigmastanol or a mixture thereof.

7. Method for the preparation of a water in oil emulsion according to any of claims 1-6
wherein folic acid is added according to any of steps (a,b,c) or a combination thereof:
a. Folic acid is added onto a carrier and as such dosed into an emulsion or an aqueous phase
b. Folic acid is added into the aqueous phase of an oil in water emulsion, homogenised by stirring for a few seconds, after which the emulsion is inverted into the corresponding water in oil emulsion through high speed stirring.
c. Folic acid is pre-dispersed in one or a combination of the ingredients of the emulsion.

8. Use of folic acid to improve the mouthfeel and emulsion break down behaviour of a water in oil emulsion comprising from 30 to 90 wt% fat and from 2 to 20 wt% sterol fatty acid esters.

## Patentansprüche

1. Wasser-in-Öl-Emulsion, die 20 bis 90 Gew.-% Fett und 2 bis 20 Gew.-% eines Sterolfettsäureesters umfasst, **dadurch gekennzeichnet, dass** die Emulsion außerdem 1,5 ppm bis 1 Gew.-% Folsäure umfasst.

2. Wasser-in-Öl-Emulsion nach Anspruch 1, wobei die Folsäuremenge 5 ppm bis 0,01 Gew.-% ist.

3. Wasser-in-Öl-Emulsion nach Anspruch 1 oder Anspruch 2, die außerdem Vitamin B6 und Vitamin B12 umfasst.

4. Wasser-in-Öl-Emulsion nach Anspruch 3, wobei die Menge an Vitamin B6 0,0010 bis 0,5 Gew.-%, bezogen auf das Gesamt-Emulsionsgewicht, ist, und die Menge an Vitamin B12 0,000005 bis 0,0005 Gew.-%, bezogen auf das Gesamt-Emulsionsgewicht, ist.

5. Wasser-in-Öl-Emulsion nach einem der Ansprüche 1 bis 4, wobei der D3,3-Wert der dispergierten Wasserphase 2 bis 8 µm ist.

6. Wasser-in-Öl-Emulsion nach einem der Ansprüche 1 bis 5, wobei der Sterolfettsäureester ausgewählt ist aus der Gruppe, umfassend Fettsäureester von β-Sitosterol, β-Sitostanol, Campesterol, Campestanol, Stigmasterol, Stigmastanol oder ein Gemisch davon.

7. Verfahren zur Herstellung einer Wasser-in-Öl-Emulsion nach einem der Ansprüche 1 bis 6,
wobei Folsäure nach einem der Schritte (a, b, c) oder einer Kombination davon zugesetzt wird:
a. Folsäure wird auf einen Träger gegeben und als solcher in eine Emulsion oder eine wässrige Phase dosiert;
b. Folsäure wird in die wässrige Phase einer ÖI-in-Wasser-Emulsion gegeben, durch Rühren für einige Sekunden homogenisiert, wonach die Emulsion durch Hochgeschwindigkeitsrühren in die entsprechende Wasser-inÖl-Emulsion invertiert wird;
c. Folsäure wird in einem Ingrediens oder einer Kombination der Ingredienzien der Emulsion vordispergiert.

8. Verwendung von Folsäure zur Verbesserung des Mundgefühls und des Verhaltens des Brechens der Emulsion einer Wasser-in-ÖI-Emulsion, die 30 bis 90 Gew.-% Fett und 2 bis 20 Gew.-% Sterolfettsäureester umfasst.

## Revendications

1. Emulsion d'eau dans l'huile comprenant de 20 à 90% en poids de matière grasse et de 2 à 20% en poids d'un ester stérolique d'acide gras, **caractérisée en ce que** l'émulsion comprend en plus 1,5 ppm à 1% en poids d'acide folique.

2. Emulsion d'eau dans l'huile selon la revendication 1, dans laquelle la quantité d'acide folique va de 5 ppm à 0,01% en poids.

3. Emulsion d'eau dans l'huile selon la revendication 1 ou la revendication 2, comprenant en plus de la vitamine B6 et de la vitamine B12.

4. Emulsion d'eau dans l'huile selon la revendication 3, dans laquelle la quantité de vitamine B6 va de 0,0010 à 0,5% en poids, ramenée au poids total de l'émulsion, et la quantité de vitamine B12 va de 0,000005 à 0,0005% en poids, ramenée au poids total de l'émulsion.

5. Emulsion d'eau dans l'huile selon l'une quelconque des revendications 1 à 4, dans laquelle le D3,3 de la phase d'eau dispersée va de 2 à 8 µm.

6. Emulsion d'eau dans l'huile selon l'une quelconque des revendications 1 à 5, dans laquelle l'ester stérolique d'acide gras est choisi dans le groupe comprenant un ester d'acide gras avec le β-sitostérol, le β-sitostanol, le campestérol, le campestanol, le stigmastérol, le stigmastanol, ou un mélange de ceux-ci.

7. Procédé de préparation d'une émulsion d'eau dans l'huile selon l'une quelconque des revendications 1 à 6, dans lequel l'acide folique est ajouté selon l'une quelconque des étapes (a, b, c) ou une combinaison de celles-ci :
a) L'acide folique est ajouté sur un support et dosé en tant que tel dans une émulsion ou une phase aqueuse.
b) L'acide folique est ajouté dans la phase aqueuse d'une émulsion d'huile dans l'eau et homogénéisé par une agitation de quelques secondes, après quoi l'émulsion est inversée en une émulsion d'eau dans l'huile correspondante au moyen d'une agitation à vitesse élevée.
c) L'acide folique est prédispersé dans l'un des constituants ou dans une combinaison de constituants de l'émulsion.

8. Utilisation d'acide folique pour améliorer la sensation en bouche et le comportement de désagrégation d'une émulsion d'eau dans l'huile comprenant de 30 à 90% en poids de matière grasse et de 2 à 20% en poids d'esters stéroliques d'acides gras.
